# EUROPÄISCHE PATENTSCHRIFT

(11) **EP 1 491 084 B1**
(45) Veröffentlichungstag und Bekanntmachung des Hinweises auf die Patenterteilung: **17.05.2006**
(21) Anmeldenummer: 04102714.5
(22) Anmeldetag: 15.06.2004
(51) Int. Cl.: A01F 12/40

(54) **Paddelmesser für einen Strohhäcksler**
Paddle knife for a straw chopper
Couteau pagaie pour une hache-paille

(30) Priorität: 23.06.2003 US 601511
(43) Veröffentlichungstag der Anmeldung: 29.12.2004
(73) Patentinhaber: DEERE & COMPANY, Moline, Illinois 61265-8098 (US)
(72) Erfinder: Dow, Chad Allen, East Moline, IL 61244 (US)
(74) Vertreter: Holst, Sönke

(56) Entgegenhaltungen:
- EP-A- 1 232 683
- US-A- 3 103 241
- US-A- 3 717 062

## Beschreibung

Die Erfindung betrifft ein Paddelmesser für einen Strohhäcksler, mit einem Messer, das eine vorlaufende Kante, eine nachlaufende Kante, an einem ersten Ende des Messers angeordnete Befestigungsmittel zur pendelnden Anbringung des Messers an einem Strohhäcksler, sowie ein zweites Ende aufweist, wobei sich eine geschärfte Schneidkante an der vorlaufenden Kante vom zweiten Ende in Richtung auf das erste Ende erstreckt.

Strohhäcksler werden an landwirtschaftlichen Erntemaschinen verwendet, um die Größe von Erntegut, das von der Erntemaschine verarbeitet wird und nicht Korn ist, zu verringern. Der Strohhäcksler umfasst typischerweise ein Gehäuse, das einen Rotor umschließt. Das Gehäuse ist mit einem Einlass zur Aufnahme von Erntegut ausgestattet, das von der Erntemaschine verarbeitet wurde und nicht Korn ist, und einem Auslass, um das gehäckselte Erntegut wieder auf dem Feld zu verteilen. Das Gehäuse ist auch mit einer Reihe stationärer Schneidmesser ausgestattet. Der Rotor umfasst typischerweise ein zylindrisches Rohr mit einer Vielzahl von Befestigungsstellen, die um den Umfang des Rotors verteilt sind. Die Strohhäckslermesser sind pendelnd an den Befestigungsstellen angebracht.

Es ist bekannt, die Strohhäckslermesser mit Paddeln auszustatten, um einen Luftfluss durch den Strohhäcksler zu erzeugen, um das gehäckselte Material besser auf dem Feld zu verteilen. Die vorlaufende Kante der Strohhäckslermesser kann mit einer geschärften Schneidkante versehen sein und die Paddel sind typischerweise an der nachlaufenden Kante der Strohhäckslermesser hinter der geschärften Schneidkante angebracht. Derartige Messer sind in der EP-A-1 232 683, US 2 932 145 A, US 3 103 241 A, US 3 717 062 A und WO 89/02215 A beschrieben.

Die der Erfindung zu Grunde liegende Aufgabe wird darin gesehen, ein Paddelmesser für einen Strohhäcksler zu schaffen, das ein Paddel zur Vergrößerung des Luftflusses aufweist und eine möglichst nahe Anbringung des Paddelmessers an einem benachbarten Gegenmesser erlaubt, um das Häckselgut fein zu zerkleinern.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Das erfindungsgemäße Paddelmesser für einen Strohhäcksler umfasst ein flaches Messer mit einer vorlaufenden und einer nachlaufenden Kante, die eine Ebene definieren. Das Paddelmesser hat ein erstes Ende, an dem sich Befestigungsmittel zur pendelnden Anbringung des Paddelmessers an den Befestigungsstellen des Strohhäckslers befinden, und ein von ersten Ende beabstandetes zweites Ende, das der Spitze des Paddelmessers entspricht. An der vorlaufenden Kante des Paddelmessers ist eine geschärfte Schneidkante geformt, die sich vom zweiten Ende in Richtung auf das erste Ende erstreckt. Ein vorzugsweise mit dem Messer einteiliges Paddel erstreckt sich von der vorlaufenden Kante gegenüber der durch das Messer definierten Ebene unter einem Winkel. Da sich das Paddel nicht bis zum zweiten Ende erstreckt, kann das Paddelmesser im Bereich der Schneidkante mit einem Gegenmesser zusammenwirken, so dass das Erntegut fein gehäckselt werden kann.

Bei Ausführungsformen der Erfindung ist eine zweite geschärfte Schneidkante an der nachlaufenden Kante angeordnet. Außerdem kann das mit zwei Kanten ausgestattete Messer an der nachlaufenden Kante auch mit einem Paddel versehen sein.

In der Zeichnung ist ein nachfolgend näher beschriebenes Ausführungsbeispiel der Erfindung dargestellt. Es zeigt:
- Fig. 1: eine halbschematische Seitenansicht eines Mähdreschers,
- Fig. 2: eine Teilfrontansicht des Strohhäckslers,
- Fig. 3: eine perspektivische Ansicht eines rechten Strohhäckslermessers,
- Fig. 4: eine perspektivische Ansicht eines linken Strohhäckslermessers,
- Fig. 5: eine perspektivische Ansicht einer zweiten Ausführungsform eines Strohhäckslermessers,
- Fig. 6: eine perspektivische Ansicht einer dritten Ausführungsform eines rechten Strohhäckslermessers, und
- Fig. 7: eine perspektivische Ansicht einer dritten Ausführungsform eines linken Strohhäckslermessers.

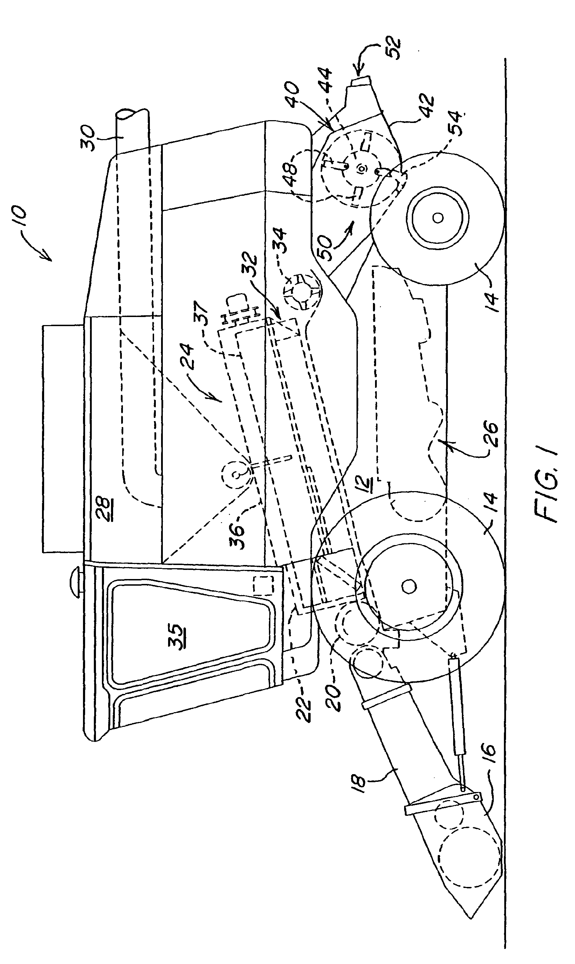

Die Figur 1 zeigt eine landwirtschaftlich genutzte Erntemaschine in der Form eines Mähdreschers 10, der einen tragenden Aufbau 12 mit im Eingriff mit dem Erdboden befindlichen Rädern 14 aufweist. Obwohl der Mähdrescher 10 mit Rädern dargestellt wird, könnte er auch zwei oder vier Raupenlaufwerke haben. Ein Erntevorsatz 16 in Form eines Schneidwerks wird verwendet, um Erntegut aufzunehmen und es einem Schrägförderer 18 zuzuführen. Das geerntete Gut wird vom Schrägförderer 18 einer Leittrommel 20 zugeführt. Die Leittrommel 20 führt das Gut nach oben durch einen Einlassübergangsabschnitt 22 einer drehbaren Gutbearbeitungseinrichtung 24 zu.

Die Gutbearbeitungseinrichtung 24 drischt und trennt das Erntegut. Korn und Spreu, die durch Roste an der Unterseite der Gutbearbeitungseinrichtung 24 fallen, werden einem Reinigungssystem 26 zugeführt. Das Reinigungssystem 26 entfernt die Spreu und führt das saubere Korn einem Elevator für sauberes Korn (nicht gezeigt) zu. Der Elevator für sauberes Korn legt das saubere Korn in einem Korntank 28 ab. Das saubere Korn im Korntank 28 kann durch einen Entladeschneckenförderer 30 auf einen Kornwagen, Anhänger oder Lastwagen entladen werden.

Ausgedroschenes Stroh, das den Trennabschnitt verlässt, wird durch einen Auslass 32 einer Fördertrommel 34 zugeführt. Die Fördertrommel 34 fördert das Stroh wiederum in einen Strohhäcksler 40. Der Betrieb des Mähdreschers 10 wird von der Bedienerkabine 35 aus gesteuert.

Die axiale Gutbearbeitungseinrichtung 24 umfasst ein zylindrisches Rotorgehäuse 36 und einen darin angeordneten Rotor 37. Der vordere Teil des Rotors 37 und des Rotorgehäuses 36 definieren den Beschickungsabschnitt der Gutbearbeitungseinrichtung 24. In Längsrichtung stromab des Beschickungsabschnitts befinden sich ein Dreschabschnitt, ein Trennabschnitt und ein Auswurfabschnitt. Der Rotor 37 weist im Beschickungsabschnitt eine konische Form mit wendelförmigen Beschickungselementen auf, um in das von der Leittrommel 20 in den Beschickungsabschnitt herangeförderte Erntegut einzugreifen. Unmittelbar stromab des Beschickungsabschnitts befindet sich der Dreschabschnitt der Gutbearbeitungseinrichtung 24. Im Dreschabschnitt weist der Rotor 37 eine zylindrische Form mit einer Anzahl von Dreschelementen auf, um das vom Beschickungsabschnitt übernommene Erntegut zu dreschen. Stromab des Dreschabschnitts befindet sich der Trennabschnitt, in dem das im ausgedroschenen Erntematerial enthaltene Korn freigesetzt wird und durch einen bodenseitigen Rost in das Reinigungssystem 26 fällt. Der Trennabschnitt geht in einen Auswurfabschnitt über, in dem von Korn verschiedenes Erntegut, d. h. Stroh, von der axialen Gutbearbeitungseinheit 24 in die Fördertrommel 34 ausgeworfen wird. Obwohl die vorliegende Erfindung hier im Kontext eines Axialmähdreschers beschrieben wird, kann sie auch an anderen Typen von Mähdreschern verwendet werden, einschließlich konventioneller Mähdrescher mit Strohschüttlern und Hybridmähdreschern mit quer angeordneten Dreschtrommeln und Rotorseparatoren.

Der Strohhäcksler 40 umfasst ein Gehäuse 42 und einen Rotor 44. Der Rotor 44 ist mit einer Vielzahl an Befestigungsstellen 46 zur Aufnahme von Strohhäckslermessern 48 ausgestattet. Das Gehäuse 42 weist einen Einlass 50 zur Aufnahme von zuvor verarbeitetem Erntegut, das kein Korn mehr enthält, und einen Auslass 52 zum Ausstoßen des gehäckselten Ernteguts zurück auf das Feld auf. Das Gehäuse 42 ist außerdem mit einer Reihe stationärer Messer 54 versehen, die mit den rotierenden Strohhäckslermessern 48 zusammenwirken. In der Figur 1 würde sich der Rotor 44 des Strohhäckslers 40 im Gegenuhrzeigersinn drehen.

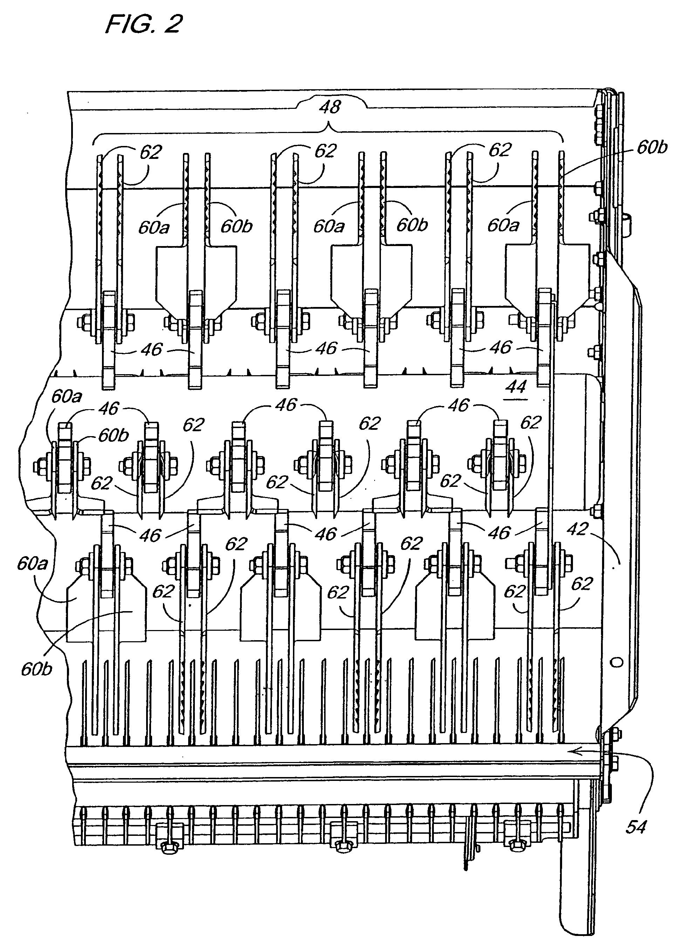

Wie in der Figur 2 dargestellt, ist der Rotor 44 mit zwei Typen von Strohhäckslermessern 48 ausgestattet, einem Paddelmesser 60 und einem geraden Messer 62. Die geraden Messer 62 sind relativ konventionellen Designs und mit geschärften vor- und nachlaufenden Kanten und einem Befestigungszusammenbau ausgestattet, so dass sie pendelnd an den Befestigungsstellen 46 angebracht werden können. Der Grund dafür, dass die geraden Messer 62 Schneidkanten sowohl an der vorlaufenden wie auch an der nachlaufenden Kante haben, liegt darin, dass sie umgedreht werden können, wenn die anfangs vorlaufende Kante stumpf wird.

Die Paddelmesser 60 weisen ein Messer 70 mit einer vorlaufenden Kante 72, einer nachlaufenden Kante 74, ein erstes Ende 76 und ein zweites Ende 78 auf. Das erste Ende 76 ist mit Befestigungsmitteln 80 ausgestattet, die ein Befestigungsloch umfassen. Diese Befestigungsmittel 80 ermöglichen es, das Messer 70 pendelnd an den Befestigungsstellen 46 am Rotor 44 anzubringen. Das zweite Ende 78 des Messers 70 ist mit einer Spitze 82 ausgestattet. Die vorlaufende Kante 72 ist mit einer geschärften Schneidkante 84 versehen, die sich von der Spitze 82 in Richtung auf das erste Ende 76 erstreckt. Nahe des ersten Endes 76 des Messers 70 befindet sich ein Paddel 86, das mit der Ebene des Messers 70 einen Winkel einschließt. Wie in den Figuren dargestellt, erstreckt sich dieses Paddel 86 in einer orthogonalen Richtung vom Messer 70 fort. Das Paddel 86 ist mit dem Messer 70 einteilig, da es aus dem Rohling herausgebogen wurde.

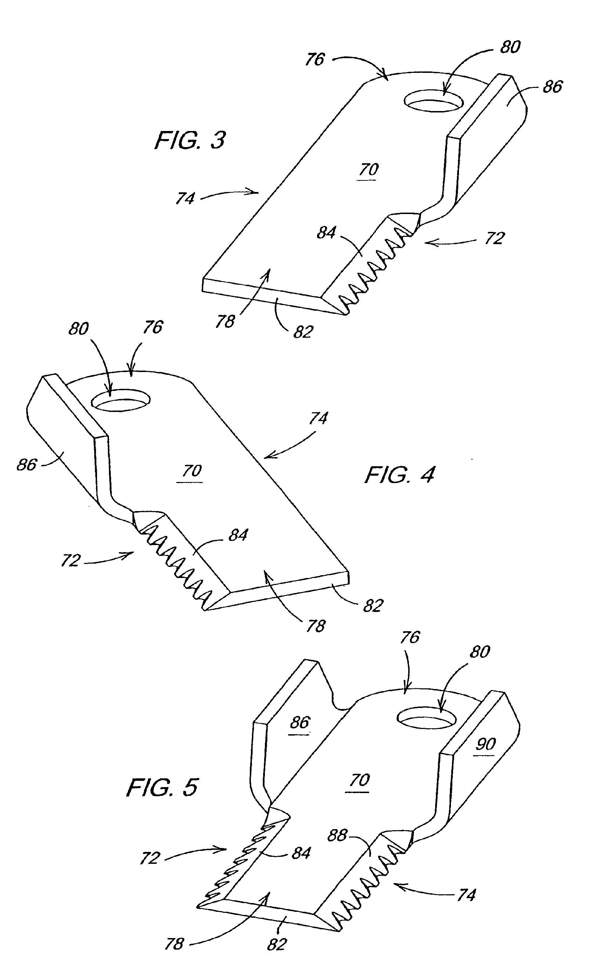

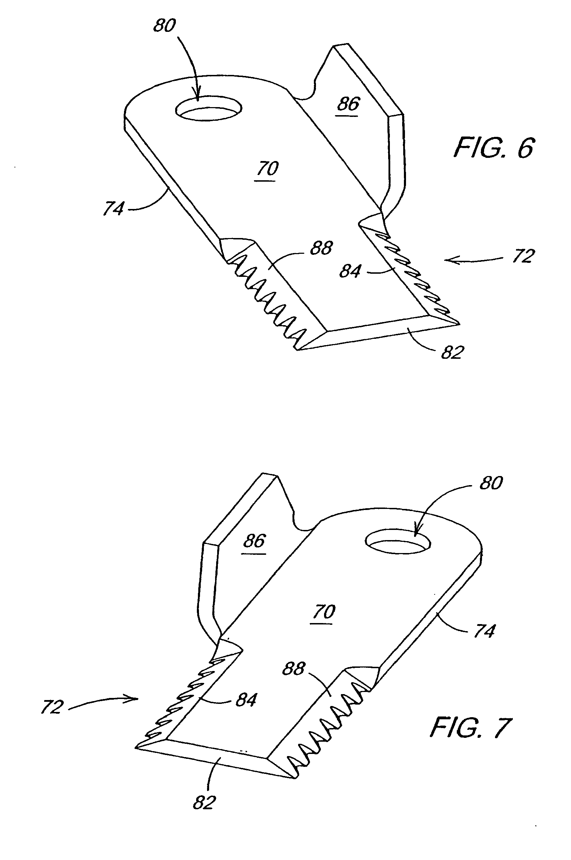

Die Figuren 3 und 4 offenbaren linke und rechte Paddelmesser 60a und 60b. Eine alternative Ausführungsform ist in der Figur 5 dargestellt, in der die nachlaufende Kante 74 ebenfalls mit einer zweiten geschärften Schneidkante 88 und einem zweiten Paddel 90 ausgestattet ist. In dieser Ausführungsform kann das Messer umgedreht und für linke wie rechte Anwendungsfälle verwendet werden. Eine dritte Ausführungsform ist in den Figuren 6 und 7 dargestellt, in der die nachlaufende Kante 74 mit einer zweiten geschärften Schneidkante 88 versehen ist, aber nicht mit einem zweiten Paddel. Diese Messer können in ähnlicher Weise umgedreht werden, wobei das Paddel in seiner umgedrehten Konfiguration jedoch an der nachlaufenden Kante anstelle an der vorlaufenden Kante positioniert wäre und die Messer die Seiten tauschen müssten.

Alle oben erwähnten Messer sind mit wellenförmig eingebuchteten Kanten und einer einzigen angeschliffenen Seite dargestellt, es könnten jedoch auch nicht-eingebuchtete und/oder doppelt angeschliffene Schneidkanten verwendet werden.

## Patentansprüche

1. Paddelmesser (60) für einen Strohhäcksler (40), mit einem Messer (70), das eine vorlaufende Kante (72), eine nachlaufende Kante (74), an einem ersten Ende (76) des Messers (70) angeordnete Befestigungsmittel (80) zur pendelnden Anbringung des Messers (70) an einem Strohhäcksler (40), sowie ein zweites Ende (78) aufweist, wobei sich eine geschärfte Schneidkante an der vorlaufenden Kante (72) vom zweiten Ende (78) in Richtung auf das erste Ende (76) erstreckt, **dadurch gekennzeichnet, dass** sich in der Nähe des ersten Endes (76) ein Paddel (86) unter einem Winkel von der vorlaufenden Kante (72) fort erstreckt.

2. Paddelmesser (60) nach Anspruch 1, **dadurch gekennzeichnet, dass** sich das Paddel (86) hauptsächlich senkrecht zur Ebene des Messers (70) erstreckt.

3. Paddelmesser (60) nach Anspruch 1 oder 2, **dadurch gekennzeichnet, dass** die nachlaufende Kante (74) mit einer geschärften Schneidkante versehen ist, die sich vom zweiten Ende (78) in Richtung auf das erste Ende (76) zu erstreckt.

4. Paddelmesser (60) nach einem der Ansprüche 1 bis 3, **dadurch gekennzeichnet, dass** sich in der Nähe des ersten Endes (76) ein zweites Paddel (90) unter einem Winkel von der nachlaufenden Kante (74) fort erstreckt.

5. Strohhäcksler (40) mit einem Rotor (44), der Befestigungsstellen (46) aufweist, an denen Paddelmesser (60) nach einem der vorhergehenden Ansprüche befestigt sind.

## Claims

1. Paddle blade (60) for a straw chopper (40) with a blade (70), which has a leading edge (72), a trailing edge (74), fastening elements (80) arranged on a first end (76) of the blade (70) for mounting the blade (70) to oscillate on a straw chopper (40), as well as a second end (78), wherein a sharpened cutting edge on the leading edge (72) extends from the second end (78) towards the first end (76), **characterised in that** in the vicinity of the first end (76) a paddle (86) extends at an angle away from the leading edge (72).

2. Paddle blade (60) according to Claim 1, **characterised in that** the paddle (86) extends predominantly perpendicularly to the plane of the blade (70).

3. Paddle blade (60) according to Claim 1 or 2, **characterised in that** the trailing edge (74) is provided with a sharpened cutting edge, which extends from the second end (78) towards the first end (76).

4. Paddle blade (60) according to one of Claims 1 to 3, **characterised in that** in the vicinity of the first end (76) a second paddle (90) extends at an angle away from the trailing edge (74).

5. Straw chopper (40) with a rotor (44), which has mounting locations (46), to which paddle blades (60) according to one of the preceding claims are fastened.

## Revendications

1. Couteau à palettes (60) pour un hache-paille (40), comportant une lame de coupe (70), qui comporte un bord antérieur (72), un bord postérieur (74), des moyens de fixation (80) agencés sur une première extrémité (76) de la lame de coupe (70) et destinés à fixer de manière pendulaire la lame de coupe (70) sur un hache-paille (40), ainsi qu'une deuxième extrémité (78), une arête de coupe affûtée s'étendant sur le bord antérieur (72) depuis la deuxième extrémité (78) vers la première extrémité (76), **caractérisé en ce que**, à proximité de la première extrémité (76), une palette (86) part du bord antérieur (72) en formant un angle.

2. Couteau à palettes (60) selon la revendication 1, **caractérisé en ce que** la palette (86) est essentiellement perpendiculaire au plan de la lame de coupe (70).

3. Couteau à palettes (60) selon la revendication 1 ou 2, **caractérisé en ce que** le bord postérieur (74) est muni d'une arête de coupe affûtée, qui s'étend depuis la deuxième extrémité (78) vers la première extrémité (76).

4. Couteau à palettes (60) selon l'une quelconque des revendications 1 à 3, **caractérisé en ce que**, à proximité de la première extrémité (76), une deuxième palette (90) part du bord postérieur (74) en formant un angle.

5. Hache-paille (40) comportant un rotor (44), qui comporte des zones de fixation (46) auxquelles sont fixés des couteaux à palettes (60) selon l'une quelconque des revendications précédentes.
